# EUROPÄISCHE PATENTSCHRIFT

(11) **EP 0 873 948 B1**
(45) Veröffentlichungstag und Bekanntmachung des Hinweises auf die Patenterteilung: **18.07.2001**
(21) Anmeldenummer: 98250122.3
(22) Anmeldetag: 06.04.1998
(51) Int. Cl.: B65G 1/00

(54) **Vorrichtung zum Umsetzen einer Ladung von Voll- auf Halbpaletten**
Apparatus for moving a load from one pallet to two half-pallets
Dispositif de transfert d'une charge d'une première palette vers deux demi-palettes

(30) Priorität: 25.04.1997 DE 29708078 U
(43) Veröffentlichungstag der Anmeldung: 28.10.1998
(73) Patentinhaber: WeserGold Getränkeindustrie GmbH & Co. KG, 31737 Rinteln (DE)
(72) Erfinder: Hartinger, Richard, 31737 Rinteln (DE)
(74) Vertreter: UEXKÜLL & STOLBERG

(56) Entgegenhaltungen:
- AU-A- 4 157 568
- DE-A- 2 131 086
- DE-A- 2 646 932
- DE-U- 29 708 078
- FR-A- 2 460 267
- US-A- 5 088 877

## Beschreibung

Die Erfindung betrifft eine Vorrichtung zum Umsetzen von Ladung von Voll- auf Halbpaletten.

Derartige Vorrichtungen werden dazu verwendet, um Ladung, die auf Vollpaletten, typischerweise Europaletten, gelagert ist, auf Halbpaletten umzusetzen, wenn eine Auslieferung nicht der gesamten Ladungseinheit auf einer Europalette, sondern von halben Ladungseinheiten jeweils auf einer Halbpalette erfolgen soll. Bekannte Umsetzvorrichtungen arbeiten z.B. nach dem Prinzip des Überschiebens, indem ein Paar von Halbpaletten bündig neben einer Europalette positioniert und anschließend die Ladung von der Europalette auf das Paar von Halbpaletten herübergeschoben wird. Wenn ein solches Umsetzen der Ladung von Voll- auf Halbpaletten gewünscht ist, muß natürlich die aus einzelnen Packungen oder Ladungseinheiten bestehende Gesamtladung so auf der Vollpaletten gepackt sein, daß eine Trennnung der Gesamtladung in Hälften entsprechend der Grundfläche der Halbpaletten möglich ist.

Es sind ferner Umsetzvorrichtungen bekannt, bei denen die Ladung geklemmt wird, und anschließend die Europalette samt Ladung um 180° gedreht wird. Die Drehvorrichtung wird dann einseitig geöffnet, und es wird die Europalette entnommen und dafür zwei Halbpaletten aufgelegt. Darauf wird die Klemmung wieder geschlossen, wieder um 180° zurückgedreht, so daß die Ladung dann auf dem Halbpalettenpaar ruht.

Es ist Aufgabe der vorliegenden Erfindung, eine Umsetzvorrichtung zum Umsetzen von Ladung von Voll- auf Halbpaletten zu schaffen, die einfach im Aufbau ist und ein präzises Umsetzen der Ladung erlaubt.

Zur Lösung dieser Aufgabe dient die Umsetzvorrichtung mit den Merkmalen des Anspruchs 1. Vorteilhafte Ausführungsformen der Erfindung sind in den Unteransprüchen aufgeführt.

Die erfindungsgemäße Umsetzvorrichtung weist eine Klemmeinrichtung mit einer Hubeinrichtung auf. Die beladenen Vollpaletten werden von einer ersten Fördereinrichtung zu der Hubeinrichtung transportiert und darin positioniert. Die Hubeinrichtung ist dazu ausgebildet, die Vollpalette anzuheben und abzusenken. Die Klemmeinrichtung ist mit Klemmbacken versehen und dazu ausgebildet, diese flächig in Anlage an die Seitenflächen der Ladung auf der durch die Hubeinrichtung angehobenen Vollpalette zu bringen und die Ladung durch Andruck einzuklemmen. Eine zweite Fördereinrichtung ist dazu vorgesehen, Halbpaletten zuzuführen und nebeneinander angeordnet wie eine Vollpalette in der Hubeinrichtung zu positionieren. Die Klemmeinrichtung ist weiter dazu ausgebildet, anschließend die Hubeinrichtung zu betätigen, um so das Paar von Halbpaletten von unten in Anlage an die eingeklemmte Ladung zu bringen und die Klemmbacken anschließend von der Ladung zu lösen. Dadurch ruht nun die Ladung der Vollpalette auf den beiden Halbpaletten, die anschließend von der Hubeinrichtung wieder abgesenkt und einzeln oder zusammen weitertransportiert werden können.

Die erfindungsgemäße Umsetzvorrichtung ist für alle Ladungen geeignet, die sich klemmen lassen. Ausgeschlossen sind lediglich Ladungen, die sehr empfindlich sind, und Ladungen, die sehr nachgiebig sind und daher den Klemmbacken ausweichen würden.

Die Erfindung wird im folgenden anhand eines Ausführungsbeispiels unter Bezugnahme auf die Zeichnungen beschrieben, in denen:
- Figur 1: eine Aufsicht auf die Klemmeinrichtung einer erfin-k dungsgemäßen Vorrichtung von oben zeigt, wobei die Klemmeinrichtung im geöffneten Zustand ist;
- Figur 2: eine Ansicht wie Figur 1 zeigt, wobei die Klemmeinrichtung geschlossen ist; und
- Figur 3: eine Seitenansicht der Klemmeinrichtung aus den Figuren 1 und 2 zeigt.

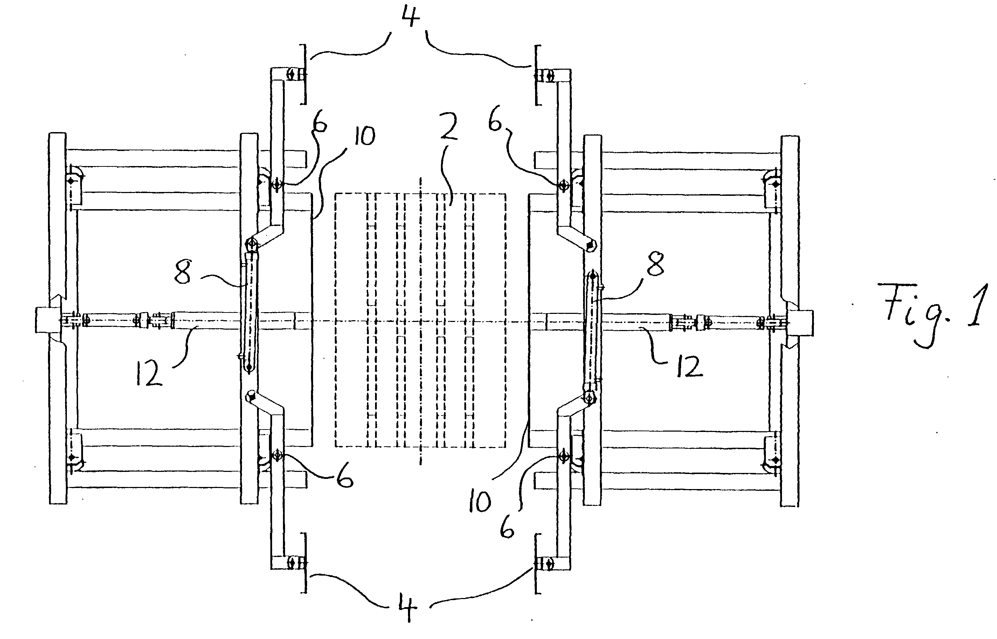

Die Klemmeinrichtung der erfindungsgemäßen Umsetzvorrichtung ist in Figur 1 in Aufsicht von oben gezeigt. Die Palette 2 befindet sich auf der Hubeinrichtung (nicht gezeigt) in der Klemmeinrichtung. Die Klemmeinrichtung weist vier Klemmbacken 4 auf, die in Anlage an zwei gegenüberliegende Seitenflächen der Ladung auf der Europalette bringbar sind. Zur Betätigung der Klemmbacken 4 dienen Hydraulikzylinder 8, die mit dem Gestell der Vorrichtung und den Klemmbackenträgern verbunden sind, um die Klemmbackenträger um ihre Achsen 6 zu schwenken und dadurch die Klemmbacken 4 in Andruck an die zwei gegenüberliegenden Seitenflächen der Ladung auf der Europalette 2 zu bringen.

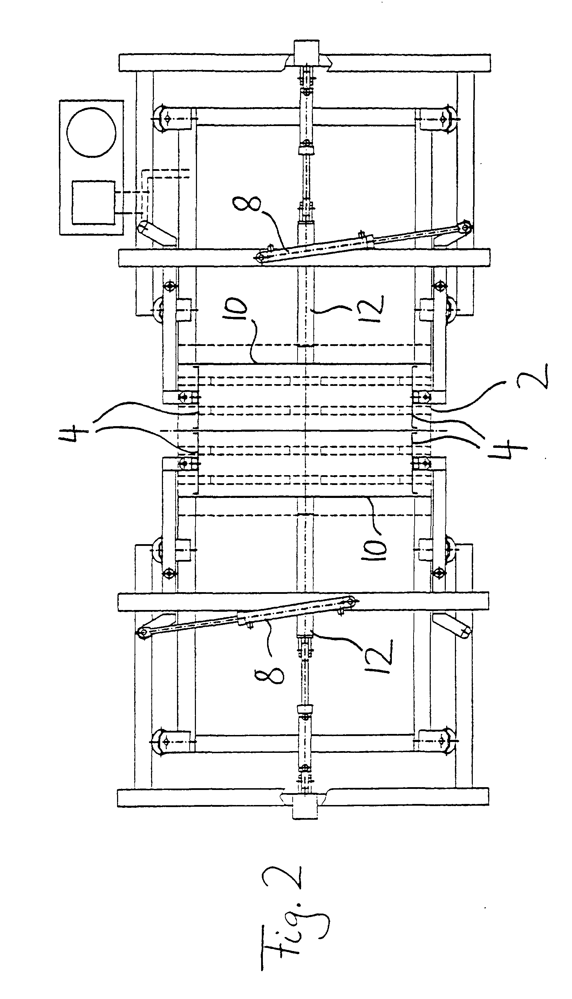

Ferner sind Klemmbacken 10 für die beiden anderen Seitenflächen der Ladung auf der Europalette 2 vorgesehen, wobei diese Klemmbacken 10 von Hydraulikzylindern 12 bewegt werden, um sie in Anlage an die beiden anderen gegenüberliegenden Seitenflächen der Ladung zu bringen und diese dadurch einzuklemmen. Der geschlossene Zustand der Klemmeinrichtung, in dem die Ladung auf der Europalette allseitig von den Klemmbacken 4 und 10 eingeklemmt ist, ist in Figur 2 dargestellt.

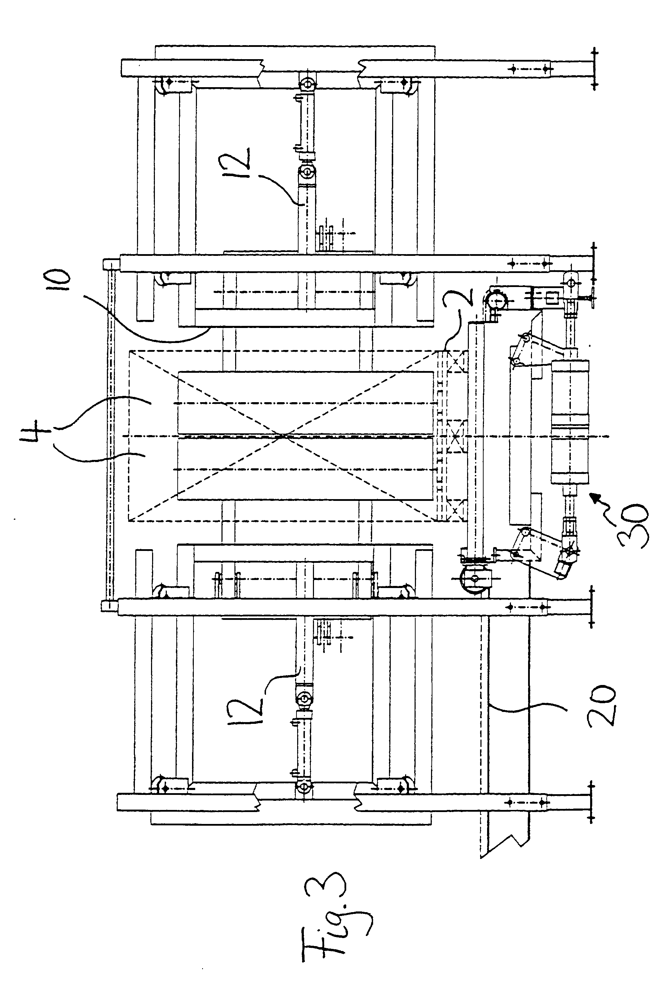

Figur 3 zeigt eine Seitenansicht der Klemmeinrichtung, wobei die Klemmbacken 4 im geschlossenen und die Klemmbacken 10 im geöffneten Zustand gezeigt sind. Die Europalette 2 wird von einer Hubeinrichtung 30 getragen, die dazu geeignet ist, die Palette anzuheben und abzusenken, wobei in der Darstellung von Figur 3 der angehobene Zustand gezeigt ist.

Die Funktionsweise der Umsetzvorrichtung ist folgende. Zunächst wird die beladene Europalette 2 über eine erste Fördereinrichtung 20 antransportiert und über einen Eckumsetzer umgelenkt und in die Hubeinrichtung gesetzt, die sich dabei im abgesenkten Zustand befindet. Zum sicheren Positionieren der Palette 2 in der Hubeinrichtung 30 sind darin Stopper vorgesehen, um eine wohldefinierte Positionierung der Palette zu erreichen. Anschließend wird die Hubeinrichtung 30 betätigt, um so die Europalette 2 mit ihrer Ladung in der Klemmeinrichtung anzuheben. Daraufhin werden die Klemmbacken 4 und 10 um die Ladung geschlossen, wobei die Europalette 2 selbst von den Klemmbacken frei bleibt. Der Klemmbackenantrieb wird so eingestellt, daß die Ladung bei Betätigung der Klemmbacken fest zwischen diesen eingeklemmt wird. Anschließend wird wiederum die Hubeinrichtung 30 betätigt, um die Europalette 2 abzusenken und über den Eckumsetzer und die erste Fördereinrichtung 20 wieder abzutransportieren.

Anschließend oder zeitlich parallel dazu wird ein Paar von Halbpaletten aus einem Palettenmagazin freigegeben und über eine zweite Fördereinrichtung antransportiert und läuft über einen Eckumsetzer in die Hubeinrichtung der Klemmeinrichtung ein, wobei sie nebeneinanderliegend und dadurch die Auflagefläche einer Vollpalette ergebend in der Hubeinrichtung mit Hilfe der Stopper exakt positioniert werden. Die Hubeinrichtung 30 hebt das Paar von Halbpaletten an, bis es von unten in Anlage an der in der Klemmeinrichtung eingeklemmten Ladung ist. Anschließend wird die Klemmung gelöst, indem die Klemmbacken 4 und 10 von den Seitenflächen der Ladung entfernt werden. Die Ladung ruht dann auf dem Halbpalettenpaar, das anschließend von der Hubeinrichtung 30 wieder abgesenkt wird. Die beladenen Halbpaletten werden daraufhin aus der Hubeinrichtung mittels Fördereinrichtungen abtransportiert und können nun entweder einzeln weiterbehandelt werden, oder werden gemeinsam und zueinander ausgerichtet zu einer weiteren Hubeinrichtung transportiert, in der sie wiederum angehoben und auf eine Europalette, gegebenenfalls auf die Europalette, von der die Ladung ursprünglich stammte, aufgesetzt werden.

## Patentansprüche

1. Vorrichtung zum Umsetzen von Ladung von Voll- auf Halbpaletten, mit:
einer ersten Fördereinrichtung (20) zum Transportieren von beladenen Vollpaletten (2) zu einer Klemmeinrichtung,
wobei die Klemmeinrichtung mit einer Hubeinrichtung (30) versehen ist, die dazu ausgebildet ist, Vollpaletten (2) anzuheben und abzusenken, und die Klemmeinrichtung weiter dazu ausgebildet ist, Klemmbacken (4,10) in Anlage an die Seitenflächen der Ladung auf der durch die Hubeinrichtung (30) angehobenen Vollpalette zu bringen und die Ladung durch Andruck einzuklemmen,
einer zweiten Fördereinrichtung zum Transportieren von Halbpaletten, die dazu ausgebildet ist, jeweils zwei Halbpaletten nebeneinander angeordet wie eine Vollpalette in der Hubeinrichtung (30) zu positionieren, wobei die Klemmeinrichtung weiter dazu ausgebildet ist, mit der Hubeinrichtung das Paar von Halbpaletten von unten in Anlage an die eingeklemmte Ladung zu bringen und die Klemmbacken (4,10) anschließend von der Ladung zu lösen.

2. Vorrichtung nach Anspruch 1, wobei die Klemmeinrichtung dazu ausgebildet ist, eine antransportierte Vollpalette (2) mit der Hubeinrichtung (30) anzuheben, anschließend die Klemmeinrichtung zum Einklemmen der Ladung zu betätigen und darauf die Vollpalette wieder abzusenken.

3. Vorrichtung nach Anspruch 1 und 2, wobei die Klemmeinrichtung dazu ausgebildet ist, ein antransportiertes Paar von Halbpaletten mit der Hubeinrichtung (30) anzuheben, anschließend die Klemmeinrichtung zu lösen und darauf die Halbpaletten mit der Ladung wieder abzusenken.

4. Vorrichtung nach einem der vorhergehenden Ansprüche, wobei weitere Förder- und Hubeinrichtungen vorhanden sind, um die beladenen Halbpaletten paarweise wiederum auf eine Vollpalatte zu setzen.

## Revendications

1. Dispositif pour transférer une charge de palettes complètes à des demi-palettes, comprenant:
un premier dispositif de transport (20) servant à transporter des palettes complètes chargées (2) jusqu'à un dispositif de serrage,
le dispositif de serrage étant pourvu d'un dispositif de levage (30) qui est agencé de manière à soulever et abaisser des palettes complètes (2), et le dispositif de serrage étant en outre agencé de manière à appliquer des mâchoires de serrage (4, 10) contre les surfaces latérales de la charge sur la palette complète soulevée par le dispositif de levage (30) et à serrer la charge par application d'une pression,
un second dispositif de transport pour transporter des demi-palettes, qui est agencé de manière à positionner respectivement deux demi-palettes côte-à-côte à la façon d'une palette complète dans le dispositif de levage (30), le dispositif de serrage étant en outre agencé de manière à appliquer à partir du bas, à l'aide du dispositif de levage, le couple de demi-palettes contre la charge serrée et ensuite à écarter les mâchoires (4, 10) de la charge.

2. Dispositif selon la revendication 1, dans lequel le dispositif de serrage est agencé de manière à soulever une palette complète amenée (2) à l'aide du dispositif de levage (30), puis à actionner le dispositif de serrage pour serrer la charge et à abaisser ensuite à nouveau la palette complète.

3. Dispositif selon les revendications 1 et 2, dans lequel le dispositif de serrage est agencé de manière à soulever un couple amené de demi-palettes, à l'aide du dispositif de levage (30), puis à desserrer le dispositif de serrage et à abaisser à nouveau les demi-palettes avec la charge sur le dispositif de serrage.

4. Dispositif selon l'une des revendications précédentes, dans lequel d'autres dispositifs de transport et de levage servant à placer à nouveau par couples les demi-palettes chargées, sur une palette complète sont prévus.

## Claims

1. Apparatus for transferring a load from full-size pallets to half-pallets, having:
a first conveying arrangement (20) for transporting loaded full-size pallets (2) to a clamping arrangement, it being the case that the clamping arrangement is provided with a lifting arrangement (30) which is designed for raising and lowering full-size pallets (2) and, furthermore, the clamping arrangement is designed for bringing clamping jaws (4, 10) into abutment against the side surfaces of the load on the full-size pallet raised by the lifting arrangement (30) and for clamping in the load by contact pressure,
a second conveying arrangement for transporting half-pallets, which is designed for positioning in each case two half-pallets arranged one beside the other, like a full-size pallet, in the lifting arrangement (30), the clamping arrangement, furthermore, being designed for bringing the pair of half-pallets, using the lifting arrangement, into abutment against the clamped-in load from beneath and then for releasing the clamping jaws (4, 10) from the load.

2. Apparatus according to Claim 1, it being the case that the clamping arrangement is designed for raising, using the lifting arrangement (30), a full-size pallet (2) which has been transported up, then for actuating the clamping arrangement for clamping in the load and, thereafter, for lowering the full-size pallet again.

3. Apparatus according to Claims 1 and 2, it being the case that the clamping arrangement is designed for raising, using the lifting arrangement (30), a pair of half-pallets which have been transported up, then for releasing the clamping arrangement and, thereafter, for lowering the half-pallets again with the load.

4. Apparatus according to one of the preceding claims, it being the case that further conveying and lifting arrangements are provided in order for the loaded half-pallets, in turn, to be placed in pairs on a full-size pallet.
